# EUROPÄISCHE PATENTANMELDUNG

(11) **EP 4 666 831 A1**
(43) Veröffentlichungstag der Anmeldung: **24.12.2025**
(21) Anmeldenummer: 25170038.1
(22) Anmeldetag: 11.04.2025
(51) Int. Cl.: A01D 34/66

(54) **LANDWIRTSCHAFTLICHE ERNTEMASCHINE**

(30) Priorität: 21.06.2024 DE 102024117530
(71) Anmelder: Pöttinger Landtechnik GmbH, 4710 Grieskirchen (AT)
(72) Erfinder: DIETACHMAIR, Andreas, 4710 Grieskirchen (AT); GREIFENEDER, August, 4710 Grieskirchen (AT); REININGER, Markus, 4710 Grieskirchen (AT)
(74) Vertreter: Lorenz Seidler Gossel Part. mbB

(57) **Zusammenfassung**

Die vorliegende Erfindung betrifft eine landwirtschaftliche Erntemaschine, insbesondere Mähwerk, mit einem Arbeitsaggregat, das mittels einer Aufhängung pendelnd aufgehängt und über den Boden führbar ist, wobei die Aufhängung im Bereich einer aufrechten Achse durch den Schwerpunkt des Arbeitsaggregats einen zentralen, gelenkigen Lagerkopf aufweist, an dem das Arbeitsaggregat befestigt ist, wobei der genannte Lagerkopf eine verstellbare Lagerkonsole zum Verstellen des Lagerkopfes relativ zum Arbeitsaggregat in einer Richtung quer zur aufrechten Achse durch den Schwerpunkt des Arbeitsaggregats aufweist.

## Beschreibung

Die vorliegende Erfindung betrifft eine landwirtschaftliche Erntemaschine, insbesondere in Form eines Mähwerks, mit einem Arbeitsaggregat, das mittels einer Aufhängung zur Bodenanpassung pendelnd aufgehängt und über den Boden führbar ist, wobei die Aufhängung im Bereich einer aufrechten Achse durch den Schwerpunkt des Arbeitsaggregats einen zentralen, gelenkigen Lagerkopf aufweist, an dem das Arbeitsaggregat pendelnd aufgehängt ist.

Bei landwirtschaftlichen Erntemaschinen wie Mähwerken soll das Arbeitsaggregat, das sich üblicherweise in der Arbeitsstellung liegend quer zur Fahrtrichtung erstreckt, möglichst gleichmäßig über seine Arbeitsbreite am Boden aufliegen und sich über Bodenwellen und ähnliche Unebenheiten möglichst leichtfüßig hinwegbewegen. Um eine solche Bodenanpassung zu erreichen, werden die Arbeitsaggregate üblicherweise pendelnd aufgehängt, wobei ein zentraler, gelenkiger Lagerkopf etwa mittig bezogen auf die Arbeitsbreite am Arbeitsaggregat befestigt wird, so dass der Lagerkopf über dem Schwerpunkt des Arbeitsaggregats zu Liegen kommt. Dabei kommt es im Wesentlichen darauf an, dass der zur Gewichtsentlastung vorgesehene Lagerkopf bezogen auf die Arbeitsbreite, also quer zur Fahrtrichtung etwa mittig über dem Schwerpunkt des Arbeitsaggregats sitzt, während ein Versatz in Fahrtrichtung wenig störend ist bzw. durch weitere Anlenkpunkte beispielsweise durch Unterlenker kompensiert werden kann, die das Arbeitsaggregat gegen den Fahrtwiderstand in Position halten.

Üblicherweise besitzt der genannte Lagerkopf bzw. die pendelnde Aufhängung zumindest eine Pendelachse, die näherungsweise parallel zur Fahrtrichtung liegend ausgerichtet ist, so dass das Arbeitsaggregat mit seinen nach rechts und links auskragenden Endabschnitten nach oben und unten pendeln kann, wobei die Aufhängung darüber hinaus oft auch insgesamt Auf- und Abbewegungen ohne Pendelanteil ermöglichen kann, um bei geraden Bodenwellen eine Anpassung zu ermöglichen. Je nach Aufhängung kann der Pendelkopf aber auch noch weitere Freiheitsgrade besitzen bzw. Pendelbewegungen um andere Achsen ermöglichen, um eine möglichst gute Bodenanpassung zu erreichen. Beispielsweise kann es auch hilfreich sein, bei Arbeitsaggregaten mit größerer Erstreckung in Fahrtrichtung, beispielsweise wenn an ein Mähwerk heckseitig ein Konditionierer und ggf. auch noch ein Querförderer angebaut ist, eine Schwenkbewegung um eine liegende Achse quer zur Fahrtrichtung zu ermöglichen, um beim Einfahren in sich quer erstreckende Bodenwellen Nickbewegungen zur Bodenanpassung ausführen zu können, die ggf. über zusätzliche Lenker gesteuert sein können.

Bei solchen pendelnd aufgehängten Arbeitsaggregaten besteht jedoch das Problem, dass beim Ausheben in die Vorgewendestellung sich das ausgehobene Arbeitsaggregat ungewollt zu einer Seite hin neigen kann, und zwar insbesondere dann, der Schwerpunkt des Arbeitsaggregats gegenüber dem zentralen Lagerkopf verschoben ist, genauer gesagt eine aufrechte Achse durch den Schwerpunkt gegenüber der Pendelachse des Lagerkopfs exzentrisch versetzt ist. Ein solcher Versatz des Schwerpunkts entsteht oft durch verschiedene Anbauteile, die als Zusatzausrüstung auf Kundenwunsch am Arbeitsaggregat verbaut werden können. Bei Mähwerken sitzt der Schwerpunkt oft nicht exakt in der Mitte der Mähbreite, da je nach Ausführungsform verschiedene Wunschausrüstungen angebaut werden, beispielsweise Beleuchtungen, hydraulische Bedienungshilfen, Schutzbügel, Straßentransportmarkierungen oder auch Funktions-Baugruppen wie Zinkenaufbereiter, Walzenaufbereiter, Schwadformer, Scheibenmähwerke oder Trommelmähwerke etc.

Auch einseitiger bzw. ungleichmäßiger Schmutzaufbau im Betrieb kann dazu führen, dass sich der Schwerpunkt aus der Mitte verschiebt.

Trotz verschiedener Ausführungsvarianten und nur wahlweise eingebauten Wunschausrüstungen soll aber nichtsdestotrotz eine möglichst einheitliche Aufhängung bzw. ein möglichst einheitlich gestalteter Maschinenrahmen einschließlich verschiedener Rahmenteile für alle Ausführungsformen verwendet werden, um durch viele Gleichteile und hierdurch höhere Stückzahlen geringere Herstellkosten zu erzielen und weniger Lagerplatz zu benötigen. Gleichzeitig gestaltet sich der Umbau von Ausführungsvarianten einfacher. Zudem möchte auch der Kunde bisweilen die Ausführungsform der Erntemaschine im Lauf der Saison den Bedingungen anpassen, beispielweise einen Umbau von Aufbereiter zu Schwadformer vornehmen, was ebenfalls durch möglichst viele Gleichteile erleichtert wird.

Um die sich hierdurch ergebenden Probleme durch den sich verschiebenden Schwerpunkt und die sich ergebende Exzentrizität zur pendelnden Aufhängung abzumildern, wurde bereits vorgeschlagen, an dem Arbeitsaggregat Gegengewichte zu montieren, um den durch Anbauteile außermittig verschobenen Schwerpunkt wieder in die Mitte der Arbeitsbreite zurückzubekommen. Solche Gegengewichte führen jedoch naturgemäß zu einem erhöhten Gewicht des Arbeitsaggregats, wodurch eine leichtfüßige Bodenanpassung beeinträchtigt wird. Gleichzeitig kommt es durch das zusätzliche Gewicht zu einer höheren Belastung der Bauteile. Hiervon abgesehen ist es auch nicht ganz einfach, mit solchen Zusatzgewichten die Schwerpunktslage wieder exakt auszutarieren, so dass beim Ausheben des Arbeitsaggregats im Vorgewende Schrägstellungen des Arbeitsaggregats tatsächlich vermieden werden können.

Es wurden daher auch schon Federelemente zum Kompensieren außermittiger Schwerpunktslagen vorgeschlagen. Hierbei können zwischen Mäh- bzw. Arbeitsaggregat und Maschinenrahmen, an dem das Mäh- bzw. Arbeitsaggregat pendelnd aufgehängt ist, Federelemente verbaut werden, welche ein Moment um die Pendelachse erzeugen und auf diesem Wege das Arbeitsaggregat in der ausgehobenen Vorgewendestellung waagrecht halten können. Solche zusätzlichen Federelemente können jedoch bislang ebenfalls zu Beeinträchtigungen der gewünschten Pendelbewegungen im Arbeitsbetrieb führen, die zur Bodenanpassung benötigt werden und möglichst leichtfüßig ausgeführt werden sollen. Hiervon abgesehen kommt es auch bei solchen Federelementen zu ähnlichen Problemen wie bei Zusatzgewichten, da verschiedene Federelemente für verschiedene Ausführungsformen und unterschiedliche Anbauteil-Konfigurationen benötigt werden, wodurch sich wiederum die Zahl der benötigten Bauteile und Halterungen signifikant erhöht.

Hiervon ausgehend liegt der vorliegenden Erfindung die Aufgabe zugrunde, eine verbesserte landwirtschaftliche Erntemaschine der genannten Art zu schaffen, die Nachteile des Stands der Technik vermeidet und letzteren in vorteilhafter Weise weiterbildet. Insbesondere soll ohne Beeinträchtigung der Bodenanpassung ein feines Austarieren des Arbeitsaggregats in der ausgehobenen Vorgewendestellung erreicht werden, um im Vorgewende ein ungewolltes zur Seite Hängen des pendelnden Arbeitsaggregats zu vermeiden.

Erfindungsgemäß wird die genannte Aufgabe durch eine landwirtschaftliche Erntemaschine gemäß Anspruch 1 gelöst. Bevorzugte Ausgestaltungen der Erfindung sind Gegenstand der abhängigen Ansprüche.

Es wird also der bislang eingeschlagene Weg verlassen, eine Exzentrizität des Schwerpunkts, wie sie durch verschiedene Ausführungskonfigurationen und Anbauteile entstehen kann, durch Kompensationsmaßnahmen wie Zusatzgewichte oder Federelemente zu kompensieren, sondern die Ursache für ungewollte Schrägstellungen in der ausgehobenen Vorgewendestellung an der Wurzel zu packen und den gelenkigen Lagerkopf, der die pendelnde Aufhängung ermöglicht, wieder in eine austarierte Lage zum ggf. außermittigen Schwerpunkt zu bringen. Es wird also bewußt zugelassen, dass der Schwerpunkt eine außermittige Lage hat, und die Position des gelenkigen Lagerkopfs verstellt, um das daran pendelnd aufgehängte Arbeitsaggregat wieder auszutarieren.

Erfindungsgemäß besitzt der zentrale, gelenkige Lagerkopf eine verstellbare Lagerkonsole zum Verstellen des Lagerkopfs relativ zum Arbeitsaggregat in einer Richtung quer zur aufrechten Achse durch den Schwerpunkt des Arbeitsaggregats. Verschiebt sich die Lage des Schwerpunkts des Arbeitsaggregats aus der Mitte, beispielsweise durch zusätzlich angebaute Wunschausrüstungen wie Beleuchtungen oder Straßenverkehrs-Sicherheitselemente oder auch andere Funktionskomponenten, kann die Position des Lagerkopfs durch die verstellbare Lagerkonsole relativ zum Arbeitsaggregat verstellt werden, so dass die Pendelachse des Lagerkopfs wieder über den verschobenen Schwerpunkt gebracht werden kann, insbesondere derart, dass die Pendelachse die aufrechte Achse durch den Schwerpunkt des Arbeitsaggregats schneiden kann. Je nach Rüstzustand und/oder angebauten Zusatzteilen kann die verstellbare Lagerkonsole passend verstellt werden, um die Pendelachse wieder über den ggf. verschobenen Schwerpunkt zu bringen und hierdurch ungewollte Schrägstellungen in der ausgehobenen Vorgewendestellung zu vermeiden.

Die Verstellbarkeit des gelenkigen Lagerkopfs quer zur Pendelachse und quer zur aufrechten Achse durch den Schwerpunkt kann aber nicht nur zum Austarieren des Arbeitsaggregats in der ausgehobenen Vorgewendestellung dienen, sondern ggf. auch hilfreich sein, wenn das Arbeitsaggregat in Hanglagen Schrägfahrten ausführen muss, so dass ein gleichmäßiger Bodenaufstand über die gesamte Arbeitsbreite an sich eine bewusste Exzentrizität des Lagerkopfs gegenüber der Mitte der Arbeitsbreite erfordert, um die bei schrägen Hangfahrten schräge Ausrichtung des Arbeitsaggregats kompensieren zu können bzw. zu beiden Enden der Arbeitsbreite hin gleichmäßige Aufstandskräfte zu ermöglichen.

In Weiterbildung der Erfindung kann die verstellbare Lagerkonsole zumindest quer zur Fahrtrichtung verstellbar ausgebildet sein, um den Lagerkopf relativ zum Arbeitsaggregat quer zur Fahrtrichtung verstellen zu können. Eine solche Querverstellbarkeit quer zur Fahrtrichtung ist insbesondere hilfreich, wenn der Lagerkopf für das Arbeitsaggregat eine Pendelachse vorsieht, die sich liegend, näherungsweise parallel zur Fahrtrichtung erstreckt. Wird der Schwerpunkt des Arbeitsaggregats quer zur Fahrtrichtung außermittig, beispielsweise weil ein zusätzlich angebautes Aggregat mehr Gewicht auf der linken Seite besitzt, kann die Pendelachse wieder über den Schwerpunkt verschoben werden.

Gegebenenfalls kann die verstellbare Lagerkonsole aber auch in andere Richtungen verstellbar ausgebildet sein, insbesondere in einer Richtung näherungsweise parallel zur Fahrtrichtung, was hilfreich sein kann, um bei schweren zusätzlichen Anbauaggregaten wie einem Konditionierer und/oder einem Querförderer, die beispielsweise heckseitig an ein Mähwerk angebaut werden und den Schwerpunkt in Fahrtrichtung spürbar nach hinten verschieben. Durch Verstellen des Lagerkopfs in Fahrtrichtung kann eine Vergleichmäßigung der Bodenaufstandskraft auch in Fahrtrichtung erzielt werden.

Insbesondere kann die verstellbare Lagerkonsole derart verstellbar sein, dass für unterschiedliche Schwerpunktslagen des Schwerpunkts des Arbeitsaggregats der Lagerkopf bzw. dessen Pendelachse über den Schwerpunkt bringbar ist und/oder die vom Lagerkopf realisierte Pendelachse zu einem Schnittpunkt mit einer aufrechten Achse durch den Schwenkpunkt bringbar ist, zumindest dann, wenn das Arbeitsaggregat eine austarierte Neutralstellung einnimmt. Je nach Aufhängung kann es zu Verschiebungen der aufrechten Achse durch den Schwerpunkt und den Lagerkopf kommen, wenn das Arbeitsaggregat Bodenanpassbewegungen ausführt, wobei in diesem Fall durch die verstellbare Lagerkonsole ein Schnittpunkt zwischen Pendelachse und aufrechter Schwerpunktsachse insbesondere dann eingestellt werden kann, wenn das Arbeitsaggregat eine noch nicht ausgelenkte neutrale Anfangs- oder Arbeitsposition einnimmt.

Die verstellbare Lagerkonsole kann insbesondere eine Schiebeführung umfassen, mittels derer der Lagerkopf relativ zum Arbeitsaggregat quer zur Fahrtrichtung und/oder quer zur Pendelachse und/oder quer zur aufrechten Achse durch den Schwerpunkt verschoben werden kann. Durch eine Fixiereinrichtung kann die über die Schiebeführung jeweils eingestellte Verstellposition fixiert werden. Die Schiebeführung kann dabei Gleitlager oder auch Wälzlager zwischen zwei gegeneinander verschieblich geführten Konsolen- bzw. Rahmenteilen aufweisen, um ein leichtes Verschieben zu ermöglichen.

Beispielsweise kann eine solche Schiebeführung ein Langloch in der Lagerkonsole und/oder in einem damit zu verbindenden Rahmenteil des Arbeitsaggregats aufweisen, in welchem Langloch ein oder mehrere Fixierbolzen vorgesehen sein können, die bei Festziehen die Verstellbarkeit entlang des Langlochs blockieren und bei Lösen ein Verschieben entlang des Langlochs ermöglichen.

Grundsätzlich wäre es aber auch möglich, die Verstellbarkeit der Lagerkonsole beispielsweise durch ein Lochbild umfassend mehrere nebeneinander angeordnete Bolzenlöcher realisiert werden, so dass durch Umstecken des Fixierbolzens und entsprechendem Versetzen der Lagerkonsole die gewünschte Verstellung erzielt werden kann.

Um aber eine komfortablere Bedienung zu ermöglichen, kann der verstellbaren Lagerkonsole auch ein Stellaktor zum Aufbringen einer Verstellkraft und zum Verstellen des gelenkigen Lagerkopfs gegenüber dem Arbeitsaggregat zugeordnet sein. Ein solcher Stellaktor kann beispielsweise einen Spindelantrieb oder eine Schraubspindel sein, die durch eine Schraubbewegung die Verstellung in der gewünschten Verstellrichtung bewirken kann. Eine solche Schraubspindel kann bspw. selbsthemmend ausgebildet sein, um die einmal eingestellte Schiebeführungs-Stellung zu halten.

In Weiterbildung der Erfindung kann der genannte Stellantrieb auch motorisch ausgebildet sein, beispielsweise einen elektrischen Spindelantrieb und/oder einen Druckmittelzylinder zum motorischen Verstellen des Lagerkopfs gegenüber dem Arbeitsaggregat umfassen.

Ist eine solche motorische Betätigung der Verstellung vorgesehen, kann die Verstellung der Position des Lagerkopfs automatisiert in Abhängigkeit eines Rüstzustands der Erntemaschinen und/oder eines Sensorsignals einer Sensorik zum Erfassen der Schwerpunktslage und/oder eines Betriebsparameters des Maschinenbetriebs eingestellt werden.

Eine solche Verstellung kann dabei halbautomatisch oder vollautomatisch erfolgen. Beispielsweise kann ein Maschinenführer über ein Auswahlmenü abgefragt werden, welche Zusatzausrüstungen oder Funktionsaggregate angebaut sind oder allgemein mit welchem Anbauteil das Arbeitsaggregat ausgerüstet worden ist. In Abhängigkeit der vom Maschinenführer eingegebenen Informationen zum Rüstzustand kann dann eine elektronische Steuervorrichtung, die mit einem Prozessor, einem Arbeitsspeicher und einem Programmspeicher versehen sein kann, die Verstellung des Lagerkopfs relativ zum Arbeitsaggregat in Abhängigkeit des jeweiligen Rüstzustands vornehmen, in dem der Stellaktor von der Steuervorrichtung entsprechend angesteuert wird.

Alternativ oder zusätzlich kann mit Hilfe einer Sensorik der jeweilige Rüstzustand automatisiert erfasst werden, beispielsweise indem ein am jeweiligen Ausrüstungsgegenstand angebrachter Transponder von einem Lesegerät der Steuervorrichtung ausgelesen wird, so dass die Steuervorrichtung auf diesem Wege den Rüstzustand erfährt.

Alternativ oder zusätzlich kann eine Sensorik auch die tatsächliche Lage des Schwerpunkts des Arbeitsaggregats relativ zur Pendelachse des Lagerkopfs erfassen, beispielsweise indem in der ausgehobenen Vorgewendestellung eine unerwünschte Schrägstellung bzw. Neigung des Arbeitsaggregats mit Hilfe eines Neigungssensors oder einem anderen Sensor wie beispielsweise einem optischen Sensor erfasst wird. Die Steuervorrichtung kann dann in Abhängigkeit des Sensorsignals die Position des Lagerkopfs relativ zum Arbeitsaggregat so lange nachsteuern bzw. einstellen, bis das Arbeitsaggregat im Vorgewende in der gewünschten, austarierten Stellung hängt.

Eine solche sensorische Erfassung des tatsächlichen Schwerpunkts kann insbesondere auch hilfreich sein, um einseitigen Schmutzaufbau im Betrieb und sich daraus ergebende Schwerpunktsverschiebungen durch Verstellen der Lagerkonsole kompensieren zu können.

Alternativ oder zusätzlich kann die Steuervorrichtung bei der Verstellung der Position des Lagerkopfs relativ zum Arbeitsaggregat aber auch Betriebsparameter berücksichtigen, die den Einsatz der Maschine auf dem Feld berücksichtigen. Beispielsweise kann mit Hilfe einer Neigungssensorik die Hangneigung bzw. die Neigung der Aufhängung der Erntemaschine gegenüber der Horizontalen oder gegenüber der Vertikalen erfasst werden, um dann in Abhängigkeit der erfassten Neigung die Position des Lagerkopfs gegenüber dem Arbeitsaggregat zu verstellen. Hierdurch kann beispielsweise auch bei hin- und hergehenden Hangfahrten, bei denen einmal die linke Maschinenseite die hangabwärtige Seite und einmal die rechte Seite der Maschine die hangabwärtige Seite ist, der Lagerkopf relativ zum Arbeitsaggregat hin und herverstellt werden, um bei verschiedenen Hangneigungen eine gleichmäßige Bodenaufstandskraft über die Maschinenbreite zu erzielen.

Alternativ oder zusätzlich kann ggf. aber auch im Arbeitsbetrieb die Bodenaufstandskraft auf einer rechten Maschinenseite und einer linken Maschinenseite sensorisch erfasst werden, um dann den Lagerkopf von der Steuervorrichtung in Abhängigkeit der erfassten Bodenaufstandskraft zu erstellen und die Bodenaufstandskraft auf diesem Wege zu vergleichmäßigen.

Alternativ oder zusätzlich kann die Steuervorrichtung auch dazu ausgebildet sein, Kurvenfahrten und/oder Kurvenradien und/oder bei Kurvenfahrten entstehende Fliehkräfte bzw. Querbeschleunigungen zu berücksichtigen und in Abhängigkeit der genannten Größen die Position des Lagerkopfs gegenüber dem Arbeitsaggregat verstellen, um eine Kompensation der auf das Arbeitsaggregat wirkenden Fliehkräfte zu erreichen bzw. eine ungewollte Neigung des Arbeitsaggregats in Folge von Fliehkräften zu vermeiden. Beispielsweise kann ein Querbeschleunigungssensor ein Querbeschleunigungssignal bereitstellen, in Abhängigkeit dessen die Steuervorrichtung den Stellaktor ansteuert und die Position des Lagerkopfs verstellt. Alternativ oder zusätzlich kann aber auch ein Längssignal von einem Schlepper an die Steuervorrichtung gespeist und von dieser berücksichtigt werden, um den Lagerkopf zu verstellen.

Der genannte zentrale, gelenkige Lagerkopf der Aufhängung kann in Weiterbildung der Erfindung Teil einer Mehrfach-Lenkeraufhängung sein bzw. an einem Lenker angebracht sein, der beispielsweise um eine liegende Lenkerachse auf- und abschwenken kann, um insgesamt Höhenbewegungen des Arbeitsaggregats zu ermöglichen, wobei solche Höhen-Schwenkbewegungen des Lenkers zu Bodenanpassbewegungen des Arbeitsaggregats genutzt, aber auch zum Ausheben des Arbeitsaggregats in die Vorgewendestellung verwendet werden können. Ein solcher Lenker kann beispielsweise an einem Anbaubock befestigt sein, mit Hilfe dessen die Erntemaschine an einem Schlepper angebaut werden kann.

Beispielsweise kann der genannte, zentrale gelenkige Lagerkopf Teil einer Dreipunktanlenkung sein, die mit Hilfe eines Oberlenkers und zwei Unterlenkern realisiert sein kann, die jeweils gelenkig am Arbeitsaggregat angelenkt sind und mit ihren anderen Enden beispielsweise an dem genannten Anbaubock gelenkig befestigt sein können. Dabei können Entlastungseinrichtungen wie beispielsweise Gewichtsentlastungsfedern oder Druckmittelzylinder an einem oder mehreren der genannten Lenker angreifen, um eine Gewichtsentlastung des Arbeitsaggregats im Arbeitsbetrieb und damit eine leichtfüßige Bodenanpassung zu erreichen. Alternativ oder zusätzlich kann aber auch ein Stellaktor an eine solche Lenkeraufhängung angebunden sein, um den Aushub über die Vorgewendestellung zu ermöglichen, wobei ein solcher Stellaktor nicht direkt an einem der Lenker angreifen muss, sondern beispielsweise auch am genannten Lagerkopf und/oder an einer Anlenkstelle am Arbeitsaggregat angreifen kann, und zum anderen an der Anlenkstelle am Anbaubock oder einem anderen Rahmenteil besitzen kann. Gleiches gilt auch für die zuvor genannten Entlastungsfedern bzw. Entlastungszylinder.

Die Erfindung wird nachfolgend anhand eines bevorzugten Ausführungsbeispiels und zugehörigen Zeichnungen näher erläutert. In den Zeichnungen zeigen:
- Fig. 1:: eine perspektivische Ansicht einer landwirtschaftlichen Erntemaschine in Form eines Mähwerks, das an einem zentralen, gelenkigen Lagerkopf pendelnd aufgehängt ist, wobei der Lagerkopf in einer mittigen Neutralstellung gezeigt ist,
- Fig. 2:: eine Draufsicht auf die genannte Maschine an deren Aufhängung aus Fig. 1,
- Fig. 3:: eine Frontansicht der Erntemaschine aus den vorhergehenden Figuren,
- Fig. 4:: eine Heckansicht der Erntemaschine aus den vorhergehenden Figuren, die eine seitliche Pendelbewegung des Arbeitsaggregats zeigt, beispielsweise bei außermittig sitzendem Schwerpunkt in der ausgehobenen Vorgewendestellung,

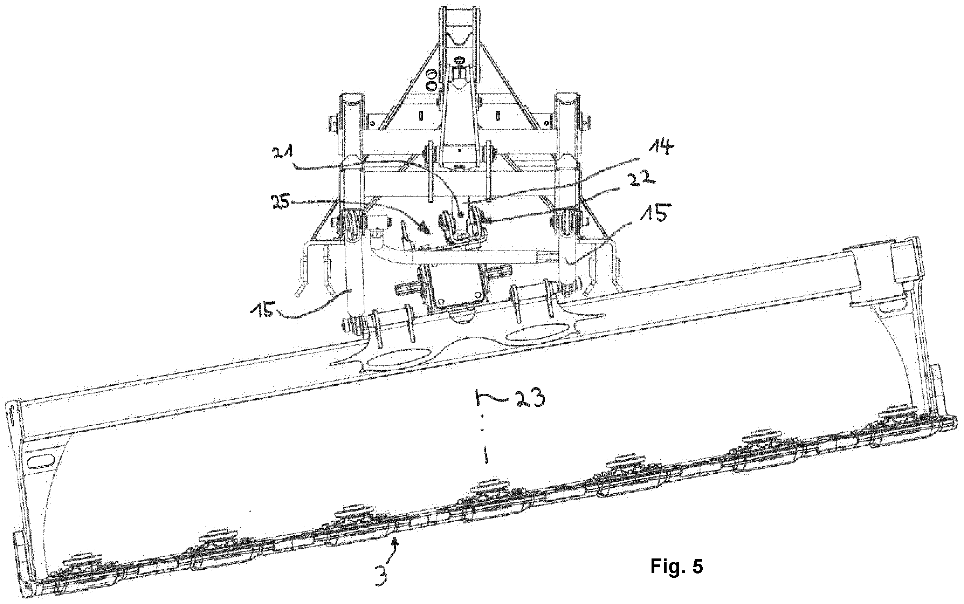

- Fig. 5:: eine Frontansicht der Erntemaschine ähnlich Fig. 3, wobei der zentrale Lagerkopf nicht mehr mittig, sondern zur rechten Seite (in Fahrtrichtung betrachtet zur linken Seite) hin verstellt ist,

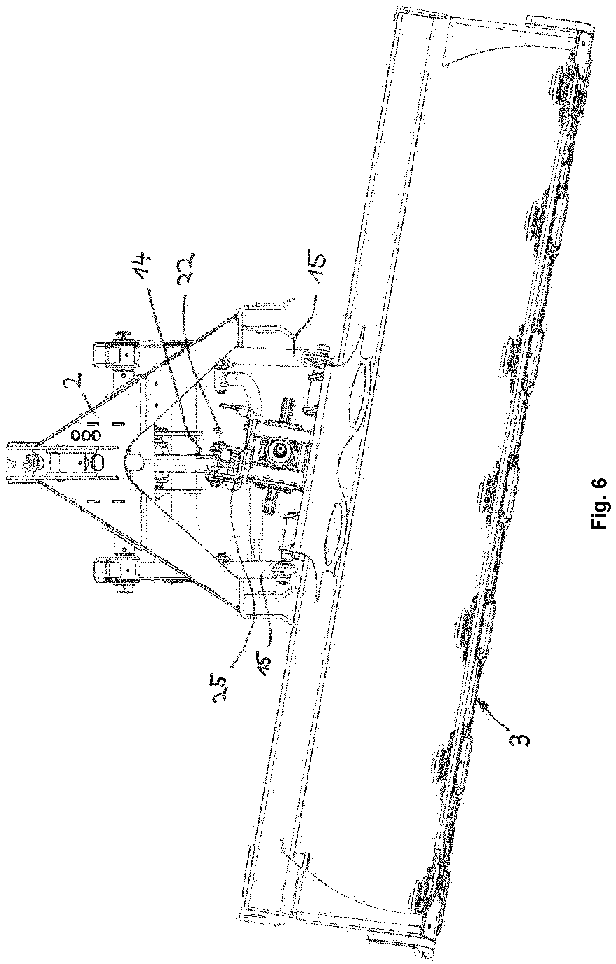

- Fig. 6:: eine Heckansicht der Erntemaschine, die die Verstellung des Lagerkopfs entsprechend Fig. 5 aus der Heckperspektive zeigt,
- Fig. 7:: eine ausschnittsweise, perspektivische Ansicht, die die verstellbare Lagerkonsole in einer nach rechts verschobenen Stellung zeigt,
- Fig. 8:: eine perspektivische Darstellung der Lagerkonsole aus Fig. 7 in einer entgegengesetzt nach links verschobenen Stellung,
- Fig. 9:: eine perspektivische Darstellung der verstellbaren Lagerkonsole, wobei als Stellaktor ein Schraubbolzen zum Verschieben der Position der Lagerkonsole gezeigt ist,
- Fig. 10:: eine Draufsicht auf die Erntemaschine ähnlich Fig. 2, wobei anders als Fig. 2 die Lagerkonsole in einer gemäß Fahrtrichtung nach links verstellten Position gezeigt ist,
- Fig. 11:: eine Frontansicht der Erntemaschine aus den vorhergehenden Figuren, wobei zusätzlich zum Mähwerk ein Querförderer umfassend zwei schneckenförmig profilierte Querförderwellen angebaut ist, die den Schwerpunkt verschieben können,
- Fig. 12:: eine Frontansicht der Erntemaschine aus den vorhergehenden Figuren, wobei als Zusatzaggregat ein Konditionierer mit rotatorisch umlaufenden Konditioniererelementen angebaut ist, und
- Fig. 13:: eine Heckansicht der Erntemaschine aus den vorhergehenden Figuren, wobei Entlastungsfedern zur Gewichtsentlastung des Arbeitsaggregats an den Anlenkpunkten der Unterlenker angebaut sind.

Wie die Figuren zeigen, kann die landwirtschaftliche Erntemaschine 1 als Mähwerk ausgebildet sein, beispielsweise in Form eines frontangebauten Mähwerks, welches über einen Anbaubock 2 an einen nicht gezeigten Schlepper angebaut werden kann. Die Erntemaschine kann aber auch als heckangebautes Gerät ausgebildet sein und beispielsweise einen am Boden abgestützten Maschinenrahmen besitzen, von dem aus dann das eigentliche Arbeitsaggregat quer auskragen kann, beispielsweise in Form eines heckseitigen Mähwerks.

Die Erntemaschine 1 könnte generell aber auch anders ausgebildet sein, beispielsweise in Form eines Mergers oder einer Heuwerbungsmaschine in Form eines Zetters oder eines Schwadkreisels, mit dem auf dem Boden liegendes Erntegut zu einem Schwad zusammengerecht werden kann.

Unabhängig von der konkreten Ausbildung der Erntemaschine 1 kann deren Arbeitsaggregat 3 zumindest in der Arbeitsstellung eine liegende Ausrichtung haben und sich mit seiner Arbeitsbreite quer zur Fahrtrichtung 4 erstrecken. Beispielsweise kann die als Mähwerk ausgebildete Erntemaschine 1, wie die Figuren zeigen, als Arbeitsaggregat 3 einen Mähbalken mit rotatorisch um eine aufrechte Achse antreibbaren, nebeneinander angeordneten Schneidmessern aufweisen, wobei das Mähwerk aber auch in Form eines Trommelmähwerks mit ebenfalls rotatorisch antreibbaren Schneidmessertrommeln ausgebildet sein könnte.

Wie die Figuren zeigen, kann das Arbeitsaggregat 3 an einem Tragrahmen 5 befestigt sein, der sich quer über die Arbeitsbreite erstrecken kann. Mit dem besagten Tragrahmen 5 ist das Arbeitsaggregat durch eine Aufhängung 6 aufgehängt, die das Arbeitsaggregat 3 über den Boden führt und es dem Arbeitsaggregat 3 erlaubt, Bodenanpassbewegungen auszuführen. Dabei ist die genannte Aufhängung 6 vorzugsweise gewichtentlastend ausgebildet, so dass das Arbeitsaggregat 3 nicht mit seinem vollen Gewicht auf dem Boden ruht, sondern nur mit einem Bruchteil hiervon bzw. mit einer gewünschten Aufstandskraft am Boden aufstehen kann, die möglichst gleichmäßig über die Arbeitsbreite verteilt ist.

Die Aufhängung 6 kann dabei eine Lenkeranordnung 7 umfassen, die den genannten Tragrahmen 5 mit dem Anbaubock 2 verbindet und eine Aushubbewegung gestattet, mit Hilfe derer das Arbeitsaggregat 3 von der am Boden befindlichen Arbeitsstellung in eine Vorgewendestellung und/oder Straßentransportstellung ausgehoben werden kann. Bei Ausbildung der Erntemaschine 1 als Frontmähwerk oder generell als frontseitig an den Schlepper anbaubares Arbeitsgerät kann in liegender Ausrichtung verbleibend in die Vorgewende- und auch in die Transportstellung ausgehoben werden. Dies gilt auch für heckanbaubare Erntemaschinen, deren Arbeitsbreite klein genug ist, um ohne Verschwenken den Straßentransport zu gestatten. Bei heckseitigen Mähwerken oder Erntemaschinen mit seitlich auskragenden Arbeitsaggregaten kann eine Vorgewendestellung beispielsweise auch in liegender Ausrichtung des Arbeitsaggregats 3 angefahren werden, während für den Straßentransport das Arbeitsaggregat 3 üblicherweise in eine aufrechte Transportstellung verschwenkt werden kann.

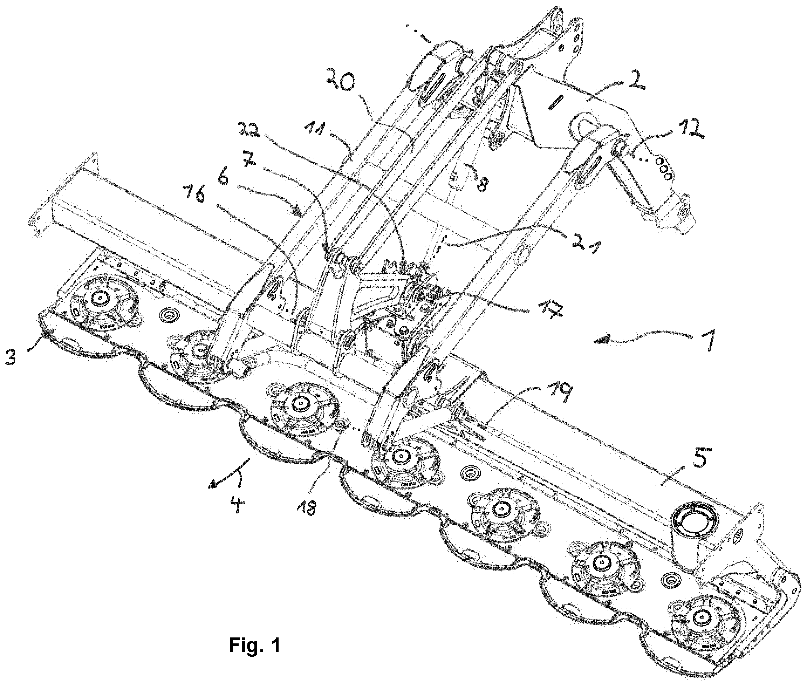

Wie beispielsweise Fig. 1 zeigt, kann der Lenkeranordnung 7 ein Druckmittelzylinder 8 zugeordnet sein, der einerseits am Anbaubock 2 angelenkt und andererseits an einem der Lenker der Lenkeranordnung 7 oder einem damit verbundenen Aufhängungsteil oder dem Tragrahmen 5 angelenkt sein kann, um durch die Kinematik der Lenkeranordnung 7 gesteuert das Arbeitsaggregat 3 in die Vorgewendestellung und ggf. auch in die Transportstellung ausheben zu können. Der genannte Druckmittelzylinder 8 kann insofern eine Aushubvorrichtung bzw. einen Aushubantrieb bilden.

Gleichermaßen kann der genannte Druckmittelzylinder 8 aber auch zur Gewichtsentlastung in der Arbeitsposition dienen und beispielsweise aus einem Druckspeicher heraus mit begrenztem Druck beaufschlagt werden.

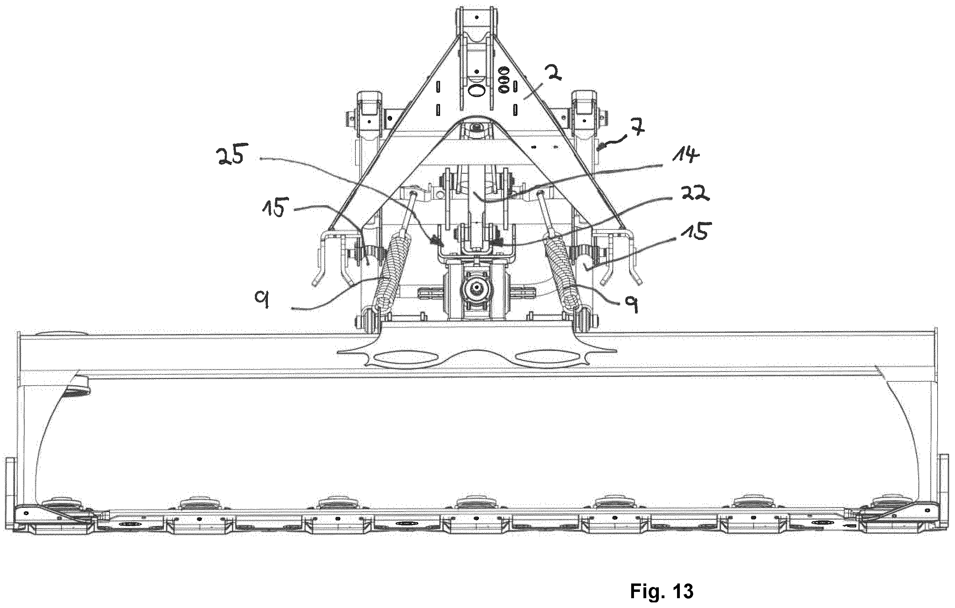

Alternativ oder zusätzlich zu einem solchen Druckmittelzylinder 8 kann eine Gewichtsentlastung in der Arbeitsposition aber auch durch Entlastungsfedern 9 erreicht werden, die beispielsweise zwischen zwei Lenkern der Lenkeranordnung 7 oder einem Abschnitt der Lenkeranordnung 7 und dem Tragrahmen 5 vorgesehen sein können, vgl. Fig. 13. Beispielweise kann ein Paar Entlastungsfedern 9 am Tragrahmen 5 im Bereich der Anlenkpunkt von Unterlenkern 15 oder auch an den genannten Unterlenkern 15 selbst angreifen und den Tragrahmen 5 gegenüber einem am Anbaubock 2 angelenkten Lenkerabschnitt anlenken und nach oben spannen, um eine Gewichtsentlastung zu erreichen, vgl. Fig. 13.

Wie die Figuren zeigen, kann die Lenkeranordnung 7 ein vom Anbaubock 2 auskragendes Lenkerjoch 11 bzw. einen Tragrahmen aufweisen, das bzw. der am Anbaubock zwei um eine liegende Schwenkachse 12 schwenkbar ist, so dass sich die gesamte Lenkeranordnung 7 auf und ab bewegen kann, sei es zur Bodenanpassung beim Überfahren von Bodenwellen oder zum Ausheben in die Vorgewendestellung. An dem besagten Lenkerjoch 11 bzw. dem hiervon gebildeten Tragrahmen, insbesondere an einem auskragenden Endabschnitt hiervon, kann das Arbeitsaggregat 3 mittels einer Mehrfach-Lenkeranordnung 13 aufgehängt sein, die beispielsweise einen Oberlenker 14 und zwei Unterlenker 15 umfassen kann, die jeweils einerseits am Lenkerjoch 11 um liegende Schwenkachsen 16 bzw. 17 schwenkbar angelenkt und andererseits am Tragrahmen 5 um Schwenkachsen 18, 19 schwenkbar angelenkt sein können. Die genannten Schwenkachsen 16-19 können sich liegend erstrecken, insbesondere quer zur Fahrtrichtung 4. Gleiches kann für die vorgenannte Schwenkachse 12 gelten, um die das Lenkerjoch 11 auf und ab wippbar ist.

Wie die Figuren zeigen, können sich das Lenkerjoch 11 einerseits und die Ober- und Unterlenker 14, 15 bezüglich der Fahrtrichtung 4 gegenläufig erstrecken bzw. ein spitzwinkliges Dreieck bilden. Insbesondere kann sich das Lenkerjoch 11 vom Anbaubock 2 aus in Fahrtrichtung nach vorne auskragend erstrecken, insbesondere in der Arbeitsposition spitzwinklig zur Horizontalen schräg nach unten vorne. Andererseits können sich die Ober- und Unterlenker 14, 15 vom auskragenden Endabschnitt des Lenkerjochs 11 aus entgegen der Fahrtrichtung zurück erstrecken, insbesondere zur Horizontalen spitzwinklig geneigt schräg nach hinten unten.

Wie Fig. 1 verdeutlicht, kann einer der Ober- oder Unterlenker, insbesondere der Oberlenker 14 durch einen Koppellenker 20 zwangsgesteuert werden, wenn das Lenkerjoch 11 auf und ab schwingt, um das Arbeitsaggregat 3 bei Auf- und Abbewegung der Lenkeranordnung 7 in einer gewünschten Ausrichtung zu halten, und zwar bezüglich einer Achse liegend quer zur Fahrtrichtung und/oder parallel zur Längserstreckung des Arbeitsaggregats 3.

Zusätzlich zu den beschriebenen Bewegungsachsen der Lenkeranordnung 7 kann das Arbeitsaggregat 3 relativ zu der genannten Lenkeranordnung pendeln, und zwar um eine Pendelachse 21, die sich liegend, näherungsweise fahrtrichtungsparallel erstrecken kann, so dass linke und rechte Endabschnitte des Arbeitsaggregats 3 nach oben bzw. nach unten wippen können, um sich Querwellen anpassen zu können bzw. beim seitlichen Anfahren an geneigte Flächen verkippen zu können.

Insbesondere kann das Arbeitsaggregat 3 an einem zentralen, gelenkigen Lagerkopf 22 aufgehängt sein, der im Bereich einer senkrechten Achse 23 durch den Schwerpunkt des Arbeitsaggregats 3 angeordnet ist.

Der genannte Lagerkopf 22 kann die Verbindung des Oberlenkers 14 mit dem Tragrahmen 5 bilden und beispielsweise in Form eines Kugelgelenks oder eines Kardangelenks ausgebildet sein, wobei je nach Ausbildung der Aufhängung 6 beispielsweise aber auch ein nur einachsiges Gelenk mit einer Gelenkachse parallel zur Pendelachse 21 vorgesehen sein kann. Sind indes mehrere Lenker, insbesondere die genannten Ober- und Unterlenker 14 und 15 vorgesehen, kann der Lagerkopf 22 mehrachsig gelenkig ausgebildet sein und auch die Anlenkpunkte der anderen Lenker, insbesondere der Unterlenker 15 mehrachsig gelenkig sein, da dann über die Kinematik der Lenkeraufhängung eine Steuerung der Pendelbewegung bzw. eine Stabilisierung des Arbeitsaggregats 3 bezüglich unerwünschter Pendel- bzw. Kippbewegungen erreicht werden kann.

Wie gesagt, kann das Arbeitsaggregat 3 über den Lagerkopf 22 insbesondere um eine fahrtrichtungsparallele Pendelachse 21 pendeln.

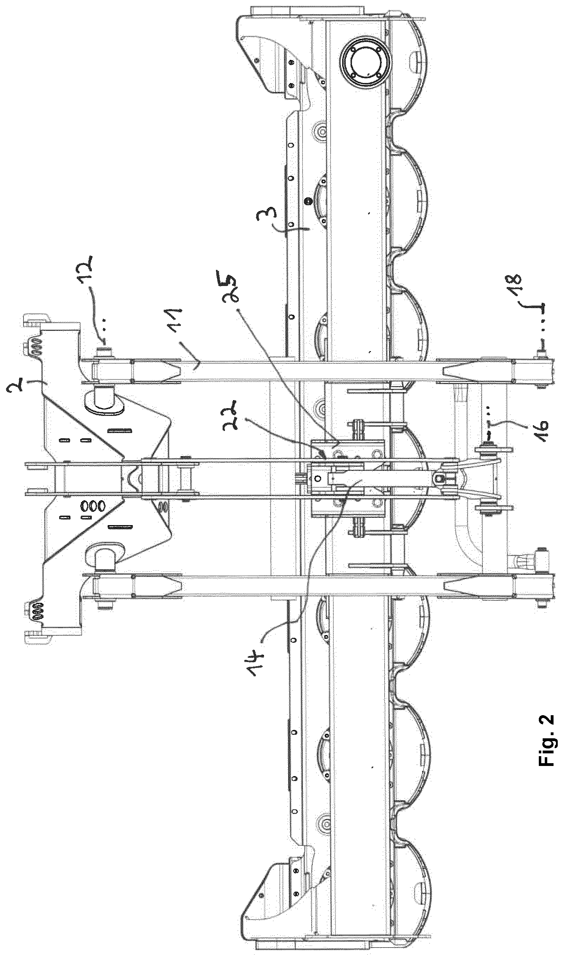

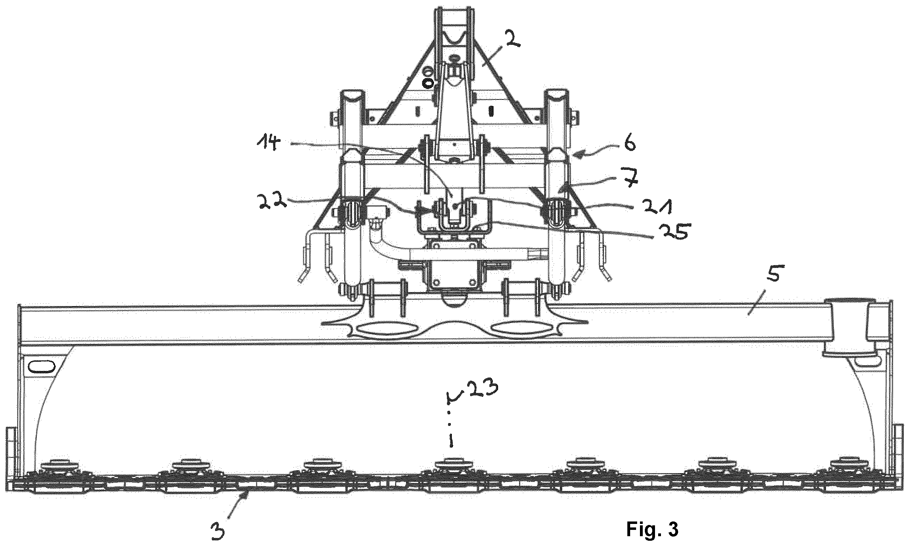

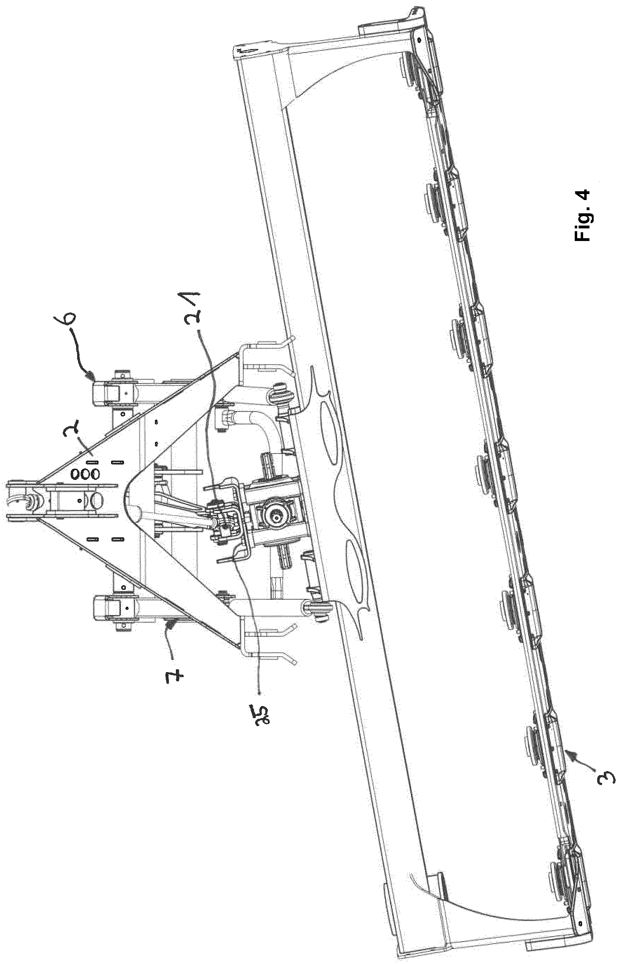

Wird das Arbeitsaggregat 3 durch Anheben der Lenkeranordnung 7 vom Boden abgehoben und in die Vorgewendestellung ausgehoben, kann es jedoch zu einem unerwünschten Verkippen des Arbeitsaggregats 3 um die Pendelachse 21 kommen, wenn der Schwerpunkt des Arbeitsaggregats 3 nicht mehr exakt unter der Pendelachse 21 liegt oder beispielsweise auch Fliehkräfte in einer Kurvenfahrt auf das Arbeitsaggregat 3 wirken. Wie die Figuren 1 bis 4 zeigen, ist der Lagerkopf 22 an sich - normalerweise in der Neutralstellung - mittig bezüglich der Arbeitsbreite des Arbeitsaggregats 3 angeordnet, was jedoch nur dann passt, wenn der Schwerpunkt des Arbeitsaggregats 3 ebenfalls mittig zur Arbeitsbreite ist. Werden jedoch Zusatzaggregate mit außermittiger Gewichtsverteilung angebaut, beispielsweise Zusatzaggregate mit einseitigen Antriebsvorrichtungen, sinkt das Arbeitsaggregat 3 in der ausgehobenen Vorgewendestellung auf einer Seite ab, vgl. Figur 4.

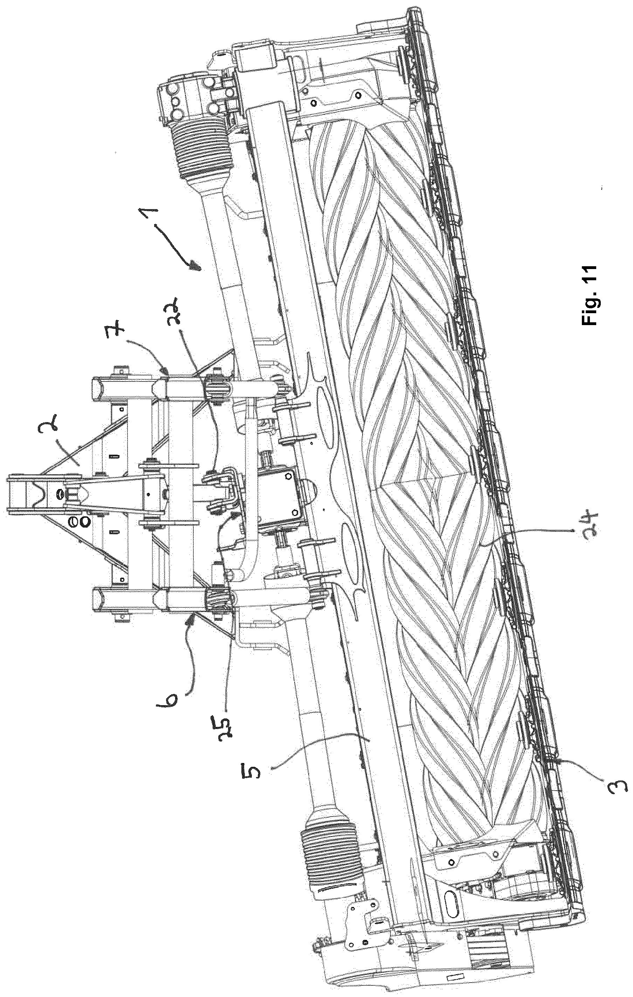

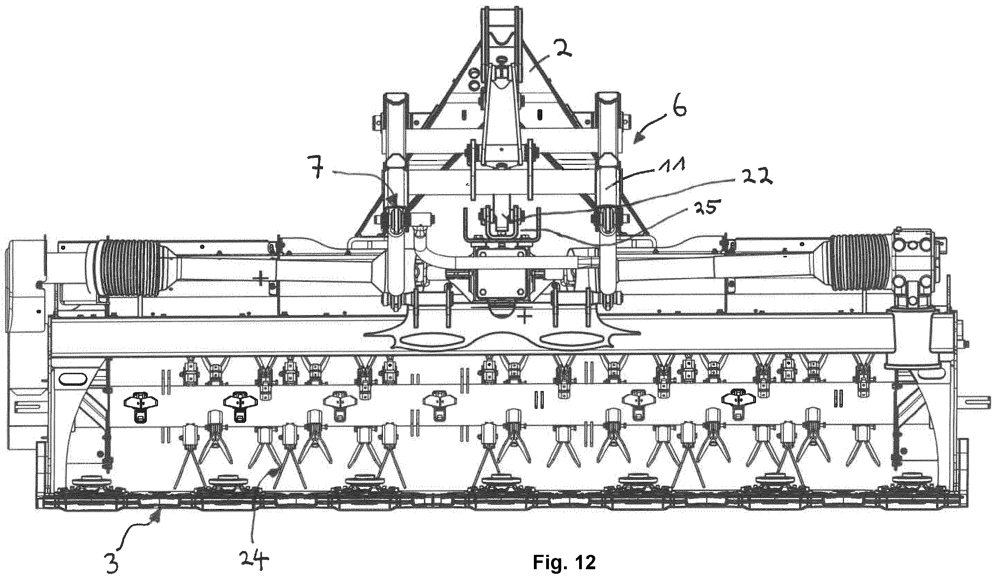

Solche zusätzlichen Anbauteile bzw. -aggregate können beispielsweise ein Querförderer und/oder Konditionierer 24 sein, vgl. Figur 11 und Figur 12, die beispielsweise heckseitig an das Mähaggregat angebaut sein können, vgl. Figur 11 und Figur 12.

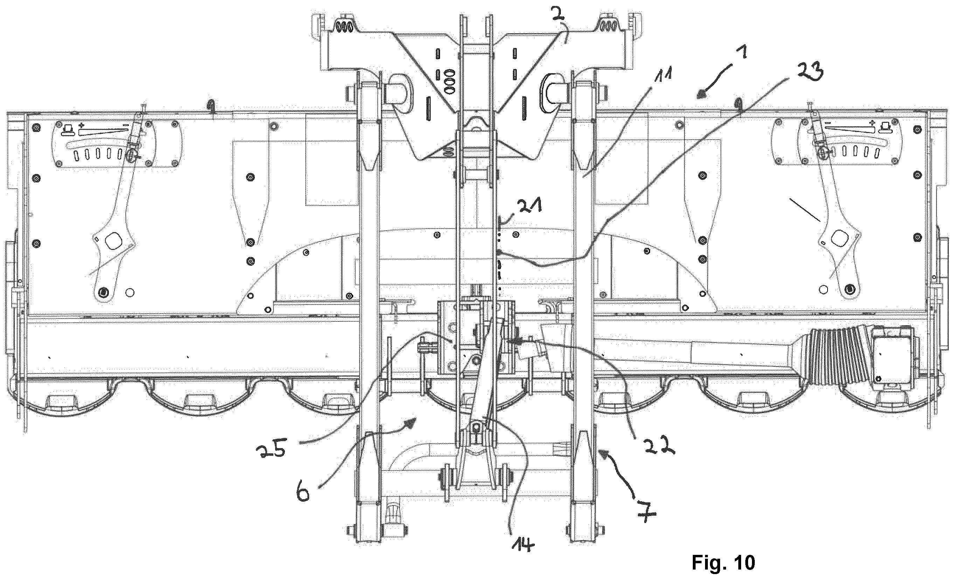

Auch wenn solche Zusatzaggregate an sich üblicherweise symmetrisch bezüglich der Mitte des Arbeitsaggregats 3 angeordnet sind bzw. sich dazu symmetrisch nach rechts und links erstrecken, kann trotzdem eine außermittige Gewichtsverteilung entstehen, beispielsweise wenn die Antriebsvorrichtung zu einem Endabschnitt des Zusatzaggregats geführt ist, vgl. vergleichend die Figur 10 und die Figuren 11, 12, wonach durch ein hinzukommendes Zusatzaggregat ein zusätzlicher Antriebsstrang zu einer Seite geführt und dort ein Getriebe vorgesehen sein kann.

Um hierdurch entstehende Verschiebungen des Schwerpunkts kompensieren zu können, kann der Lagerkopf 22 gegenüber dem Arbeitsaggregat 3 verschoben werden, und zwar in einer Richtung quer zur Pendelachse 21 und quer zur aufrechten Achse 23 durch den Schwerpunkt des Arbeitsaggregats 3, um die Pendelachse 21 sozusagen wieder über den exzentrisch versetzten Schwerpunkt zu bekommen.

Wie die Figuren zeigen, kann der Lagerkopf 22 eine verstellbare Lagerkonsole 25 aufweisen, die eine Verstellbarkeit in der genannten Richtung quer zur Pendelachse 21 und quer zur aufrechten Schwerpunktsachse 13 besitzt. Die genannte Lagerkonsole 25 kann Teil des gelenkigen Lagerkopfes 22 sein bzw. den Lagerkopf 22 oder dessen Gelenkteil mit dem Tragrahmen 5 verbinden.

Die Lagerkonsole 25 kann dabei selbst zwei zueinander verschiebliche Konsolenteile 26, 27 umfassen, die relativ zueinander in der besagten Richtung verstellbar sein können, und zwar vorzugsweise mittels einer Schiebeführung 28, die eine Schiebeführungsachse quer zur Pendelachse 21 des Lagerkopfs 22 und quer zur aufrechten Achse 23 durch den Schwerpunkt besitzt.

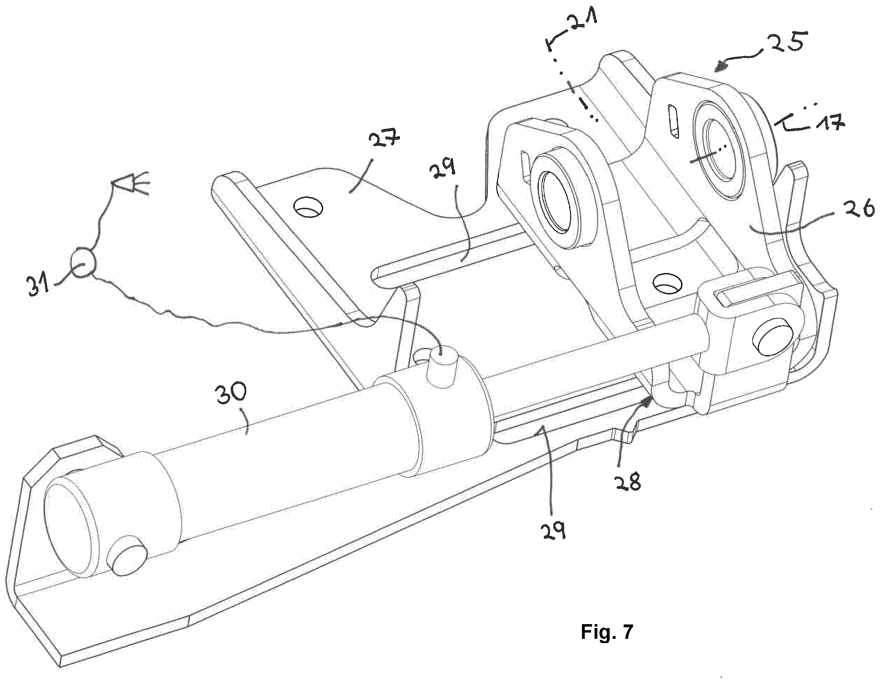

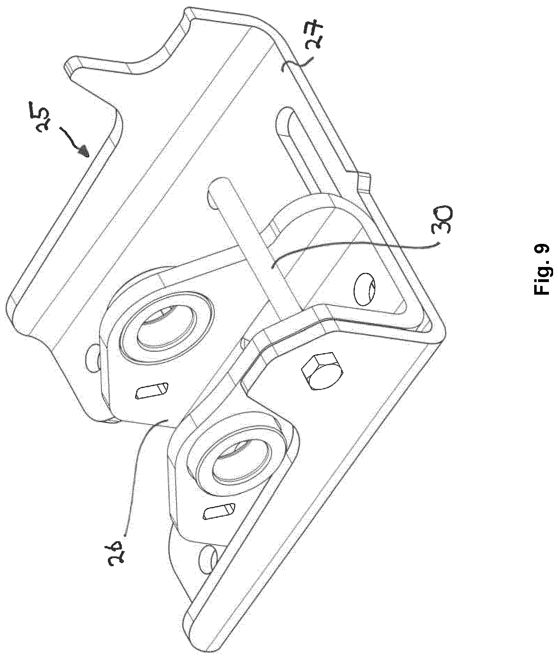

Wie die Figuren 7, 8 und 9 zeigen, können die beiden Konsolenteile 26, 27 durch die Schiebeführung 28 zueinander verschieblich gelagert und miteinander verbunden sein, wobei beispielsweise ein Konsolenteil 27 ein oder mehrere Langlöcher 29 besitzen kann, in denen das andere Konsolenteil 26 beispielsweise mittels Zapfen oder Schraubverbindungen geführt sein kann. Die Schiebeführung 28 kann jedoch auch anders ausgebildet sein, beispielsweise eine Schwalbenschwanznut umfassen, in der ein T-förmiger oder V-förmig aufgespreizter Führungskeil laufen kann. Alternativ oder zusätzlich kann an einem Konsolenteil auch eine Führungsstange vorgesehen sein, auf der das andere Konsolenteil mit einer Bohrung laufen kann.

Die beiden Konsolenteile 26, 27 können separate Bauteile bilden, wobei ein Konsolenteil 26 am Lagerkopf 22 befestigt werden bzw. am Oberlenker 14 der Lenkeranordnung 7 gelenkig angelenkt werden kann, während der andere Konsolenteil 27 am Tragrahmen 5 befestigt werden kann, beispielsweise dort festgeschweißt oder festgeschraubt werden kann. Alternativ wäre es aber auch möglich, eines der Konsolenteile 27 integral einstückig am Tragrahmen 5 des Arbeitsaggregats 3 anzuformen bzw. einen Abschnitt des Tragrahmens 5 als Konsolenteil auszubilden.

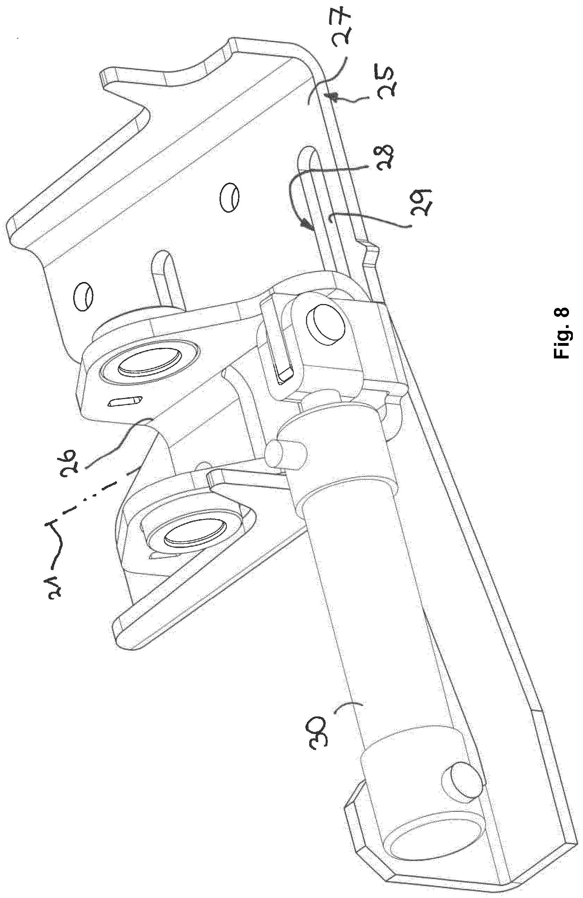

Wie Figur 7 und 8 zeigen, kann die Lagerkonsole 25 vorteilhafterweise durch einen motorischen Stellaktor 30 beispielsweise in Form eines Hydraulikzylinders verstellt werden, wobei der Stellaktor 30 die beiden Konsolenteile 26, 27 entlang der Schiebeführung 28 zueinander verschieben kann.

Ein solcher Stellaktor 30 kann von einer elektronischen Steuervorrichtung 31 in Abhängigkeit verschiedener Parameter angesteuert und die Lagerkonsole 25 hierdurch verstellt werden, wie eingangs schon ausführlich erläutert. Ist der Stellaktor 30 ein Hydraulikzylinder, umfasst die Steuervorrichtung Druckkreis-Steuermittel wie Ventile, Mengenregler und dgl., die von der elektronischen Steuervorrichtung 31 angesteuert werden, um den Hydraulikzylinder 30 in der gewünschten Weise zu verstellen.

Alternativ kann aber auch eine Schraubspindel oder ein Schraubbolzen zwischen den beiden Konsolenteilen 26, 27 vorgesehen sein, um die gewünschte Verschiebung bzw. Einstellung zu erzielen, vgl. Figur 8.

## Patentansprüche

1. Landwirtschaftliche Erntemaschine, insbesondere Mähwerk, mit einem Arbeitsaggregat (3), das mittels einer Aufhängung (6) pendelnd aufgehängt und über den Boden führbar ist, wobei die Aufhängung (6) im Bereich einer aufrechten Achse (23) durch den Schwerpunkt des Arbeitsaggregats (3) einen zentralen, gelenkigen Lagerkopf (22) aufweist, an dem das Arbeitsaggregat (3) befestigt ist, **dadurch gekennzeichnet, dass** der genannte Lagerkopf (22) eine verstellbare Lagerkonsole (25) zum Verstellen des Lagerkopfes (22) relativ zum Arbeitsaggregat (3) in einer Richtung quer zur aufrechten Achse (23) durch den Schwerpunkt des Arbeitsaggregats (3) aufweist.

2. Landwirtschaftliche Erntemaschine nach dem vorhergehenden Anspruch, wobei die verstellbare Lagerkonsole (25) quer zur Fahrtrichtung (4) und/oder parallel zur Arbeitsbreite des Arbeitsaggregats (3) verstellbar ausgebildet ist.

3. Landwirtschaftliche Erntemaschine nach einem der vorhergehenden Ansprüche, wobei die verstellbare Lagerkonsole (25) derart verstellbar ausgebildet ist, dass für unterschiedliche Schwerpunktlagen des Schwerpunkts des Arbeitsaggregats (3) der Lagerkopf (22) und/oder die Pendelachse (21) des Lagerkopfs (22) über den Schwerpunkt des Arbeitsaggregats (3) bringbar ist, insbesondere derart, dass die Pendelachse (21) für verschiedene Schwerpunktslagen mit der aufrechten Achse (23) durch den Schwerpunkt des Arbeitsaggregats (3) zu einem Schnittpunkt bringbar ist.

4. Landwirtschaftliche Erntemaschine nach einem der vorhergehenden Ansprüche, wobei die verstellbare Lagerkonsole (25) eine Schiebeführung (28) zum Verschieben des Lagerkopfs (22) quer zur Pendelachse (21) und quer zu der aufrechten Achse (23) durch den Schwerpunkt des Arbeitsaggregats (3) aufweist, wobei eine Fixiereinrichtung zum Fixieren der Schiebeführung (28) in verschiedenen Verschiebepositionen vorgesehen ist.

5. Landwirtschaftliche Erntemaschine nach einem der vorhergehenden Ansprüche, wobei ein Stellaktor (30) zum Verstellen der verstellbaren Lagerkonsole (25) vorgesehen ist.

6. Landwirtschaftliche Erntemaschine nach dem vorhergehenden Anspruch, wobei der Stellaktor (30) motorisch ausgebildet ist, insbesondere einen Druckmittelzylinder oder einen Spindelantrieb umfasst.

7. Landwirtschaftliche Erntemaschine nach einem der vorhergehenden Ansprüche, wobei eine Steuervorrichtung (31) zum Verstellen der verstellbaren Lagerkonsole (25) in Abhängigkeit eines Rüstzustand-Signals, das von einer Rüstzustands-Sensorik erzeugbar und/oder von Rüstzustands-Eingabemitteln eingebbar ist, vorgesehen ist.

8. Landwirtschaftliche Erntemaschine nach einem der vorhergehenden Ansprüche, wobei eine/die Steuervorrichtung (21) zum Verstellen der verstellbaren Lagerkonsole (25) in Abhängigkeit eines Sensorsignals einer Sensorik, das einen außermittigen Versatz des Schwerpunkts des Arbeitsaggregats (3) und/oder eine Neigung des Arbeitsaggregats (3) in der ausgehobenen Vorgewendestellung charakterisiert, vorgesehen ist.

9. Landwirtschaftliche Erntemaschine nach einem der vorhergehenden Ansprüche, wobei eine/die Steuervorrichtung (31) zum Verstellen der verstellbaren Lagerkonsole (25) in Abhängigkeit zumindest eines Maschinenbetriebsparameters umfassend zumindest eine Hangneigung quer zur Fahrtrichtung (4) vorgesehen ist.

10. Landwirtschaftliche Erntemaschine nach einem der vorhergehenden Ansprüche, wobei eine/die Steuervorrichtung (31) zum Verstellen der verstellbaren Lagerkonsole (25) in Abhängigkeit eines Sensorsignals einer Sensorik, das eine Kurvenfahrt und/oder eine bei der Kurvenfahrt auftretende Fliehkraft und/oder einen Lenkwinkel charakterisiert, vorgesehen ist.

11. Landwirtschaftliche Erntemaschine nach einem der vorhergehenden Ansprüche, wobei der zentrale, gelenkige Lagerkopf (22) Teil einer Lenkeranordnung (7) der Aufhängung (6) ist, die zusätzlich zur Pendelbewegung um die Pendelachse (21) weitere Bodenanpassbewegungen um andere Bewegungsachsen vorsieht.

12. Landwirtschaftliche Erntemaschine nach dem vorhergehenden Anspruch, wobei die Lenkeranordnung (7) einen Oberlenker (14) und zwei Unterlenker (15) umfasst, an denen das Arbeitsaggregat (3) mittels dreier Anlenkpunkte angelenkt ist.

13. Landwirtschaftliche Erntemaschine nach dem vorhergehenden Anspruch, wobei der zentrale Lagerkopf (22) den Anlenkpunkt des Oberlenkers (14) am Arbeitsaggregat (3) bildet, wobei die verstellbare Lagerkonsole (25) quer zur Längsachse des Oberlenkers (14) verstellbar ist und den Oberlenker-Anlenkpunkt quer zur Längsachse des Oberlenkers (14) relativ zum Arbeitsaggregat (3) verschiebt.

14. Landwirtschaftliche Erntemaschine nach einem der beiden vorhergehenden Ansprüche, wobei die genannten Ober- und Unterlenker (14, 15) an einem Tragrahmen angelenkt und aufgehängt sind, welcher an einem Anbaubock (3) um eine liegende Schwenkachse (12) auf- und abwippbar ist, wobei der genannte Tragrahmen vorzugsweise von einem Lenkerjoch (11) gebildet ist, an dessen auskragendem Endabschnitt die genannten Ober- und Unterlenker (14, 15) angelenkt sind.

15. Landwirtschaftliche Erntemaschine nach dem vorhergehenden Anspruch, wobei die Ober- und Unterlenker (14, 15) an ihren Anlenkpunkten um Schwenkachsen (16, 17, 18, 19) schwenkbar gelagert sind, die parallel zur Schwenkachse (12) des Tragrahmens am Anbaubock (2) ausgerichtet sind und/oder sich liegend quer zur Fahrtrichtung (4) erstrecken.
